# EUROPÄISCHE PATENTSCHRIFT

(11) **EP 3 722 169 B1**
(45) Veröffentlichungstag und Bekanntmachung des Hinweises auf die Patenterteilung: **07.06.2023**
(21) Anmeldenummer: 20165732.7
(22) Anmeldetag: 25.03.2020
(51) Int. Cl.: B60W 30/08, B60W 30/09, B60W 30/095, B60W 50/00, B60W 50/14, B60W 60/00

(54) **KRAFTFAHRZEUG UND VERFAHREN ZUR KOLLISIONSVERMEIDUNG**
VEHICLE AND METHOD FOR AVOIDING COLLISION
VÉHICULE AUTOMOBILE ET PROCÉDÉ D'ÉVITEMENT D'UNE COLLISION

(30) Priorität: 12.04.2019 DE 102019205365
(43) Veröffentlichungstag der Anmeldung: 14.10.2020
(73) Patentinhaber: Volkswagen Aktiengesellschaft, 38440 Wolfsburg (DE)
(72) Erfinder: Pfadler, Andreas, 13359 Berlin (DE); Lehmann, Bernd, 38444 Wolfsburg (DE)
(74) Vertreter: 2SPL Patentanwälte PartG mbB

(56) Entgegenhaltungen:
- EP-A1- 1 921 591
- EP-A1- 3 036 124
- EP-B1- 3 036 124
- DE-A1- 10 125 966

## Beschreibung

Die Erfindung betrifft ein Kraftfahrzeug mit einer zum Durchführen eines Verfahrens zur Kollisionsvermeidung von Kraftfahrzeugen eingerichteten Steuereinheit. Die Erfindung betrifft ferner solch ein Verfahren zur Kollisionsvermeidung. Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Durch Anwendung solcher Assistenzsysteme geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein automatisiert fahrendes Fahrzeug, welches vollständig ohne Eingriffe eines Menschen manövrieren kann. Jedoch bieten bereits teilautomatisiert operierende Fahrzeuge zahlreiche Möglichkeiten, um die Fahrsicherheit und das Fahrerlebnis für einen Fahrer zu verbessern. Beispielsweise können Assistenzsysteme genutzt werden, um die Gefahr einer Kollision zwischen Fahrzeugen zu vermeiden. Dies ist insbesondere hinsichtlich größerer Fahrzeuge vorteilhaft, bei denen es beispielsweise in Kurvenfahrten zum teilweisen Überschreiten der Spurbegrenzungen kommen kann. Ebenfalls kritisch sind Anhänger, die bei Kurvenfahrten ausschwenken können, wobei sich das Ausschwenkverhalten dritten Verkehrsteilnehmern in der Regel nicht ohne weiteres erschließt. Bekannte Maßnahmen, um beispielsweise auf den vergrößerten Schwenkbereich von Anhängern hinzuweisen, sind Hinweisschilder, Warnleuchten oder Fahnen, die in der Regel am hinteren Ende des Anhängers befestigt sind. Somit sind diese Warnhinweise für entgegenkommende Fahrzeuge nicht zu sehen. Aus der DE 10 2006 013 817 B4 ist es ferner bekannt, dass ein Fahrzeug mit ausschwenkendem Überstand selbst detektiert, ob die Gefahr besteht, dass der Überstand über eine Fahrspurbegrenzung hinaus ausschwenkt. Wird eine solche Gefahr ermittelt, wird eine Warnmeldung an andere Verkehrsteilnehmer ausgegeben.

EP 3 036 124 A1 betrifft ein Fahrerassistenzsystem zur Vorausberechnung zukünftiger Fahrsituationen eines Kraftfahrzeugs für ein vorgegebenes Zeitintervall durch Auswertung von Ego-Daten des Kraftfahrzeugs und Umgebungsdaten bezüglich der Kraftfahrzeugumgebung,

DE 101 25 966 A1 offenbart ein Kurvenwarnsystem für lange Fahrzeuge, das eine Sensoranordnung zur Messung des Lenkwinkels oder mehrerer Lenkwinkel und eine Erkennungseinrichtung zur Erkennung von seitlichen Hindernissen. Der Fahrer wird gewarnt, wenn eine Kollision wahrscheinlich ist.

EP 1 921 591 A1 beschreibt ein Fahrerassistenzsystem mit einem Videosensor zum Erfassen der Fahrzeugumgebung, insbesondere für die Erfassung der Fahrspur und von auf und/oder neben der Fahrspur befindlichen Objekten.

Bei diesen und anderen bekannten Verfahren zur Ausgabe von Warnhinweisen ausschwenkender Fahrzeuge, ermittelt jedoch stets nur das potentiell ausschwenkende Fahrzeug selbst, ob ein Einschwenken in zusätzliche Fahrstreifen zu befürchten ist, und gibt gegebenenfalls einen Warnhinweis aus. Dieser Hinweis wird dabei wenig selektiv an Verkehrsteilnehmer in der Umgebung übermittelt, selbst wenn diese nicht von dem Ausschwenken betroffen sind. Damit geht nachteilig die Gefahr von Falschmeldungen einher, welche die Akzeptanz für derartige Warnsysteme beeinträchtigen und insbesondere dazu führen können, dass empfangene Warnmeldungen weniger berücksichtigt werden.

Der Erfindung liegt nun die Aufgabe zugrunde, den Stand der Technik zu bereichern und die sich aus diesem ergebenden Nachteile zu überwinden oder zumindest zu verringern und ein verbessertes Verfahren zum Vermeiden von Kollisionen zwischen Fahrzeugen bereitzustellen.

Die erfindungsgemäße Aufgabe wird gelöst durch ein Fahrzeug und Verfahren gemäß den Patentansprüchen. Bevorzugte Weiterbildungen sind Gegenstand der Unteransprüche.

Ein erster Aspekt der Erfindung betrifft ein Kraftfahrzeug, insbesondere einen Personenkraftwagen mit Verbrennungs-, Elektro- oder Hybridmotor, welches zumindest einen zum Erfassen von Umgebungsdaten eingerichteten ersten Sensor, zumindest einen zum Erfassen von Fahrzeugdaten eingerichteten zweiten Sensor, ein zum Herstellen einer Datenverbindung mit einem anderen Kraftfahrzeug eingerichtetes Kommunikationsmodul, ein zum automatisierten Fahren des Kraftfahrzeugs eingerichtetes Fahrsystem und zumindest ein Ausgabeelement für ein optisches beziehungsweise akustisches Warnsignal aufweist.

Erfindungsgemäß ist der zumindest eine erste Sensor dabei dazu ausgebildet, die Umgebung des Fahrzeugs betreffende Sensorsignale zu erfassen. Der zumindest eine zweite Sensor ist dabei dazu ausgebildet, das Fahrzeug selbst betreffende Sensorsignale zu erfassen. Das Kommunikationsmodul ist dabei dazu ausgebildet, Informationen über ein Kommunikationsnetzwerk, insbesondere über Fahrzeug zu Fahrzeug Kommunikation *(vehicle to vehicle* - *V2V*), zu empfangen. Das Fahrsystem ist insbesondere zur teil- oder vollautomatisierten Längs- und/oder Querführung des Fahrzeugs eingerichtet und das Ausgabeelement ist bevorzugt als Teil einer digitalen Instrumententafel oder eines Infotainmentsystems ausgebildet.

Das Kraftfahrzeug weist ferner eine Steuereinheit auf, wobei die Steuereinheit dafür eingerichtet ist, anhand von Fahrzeugdaten und Umgebungsdaten und/oder Kartendaten eine prognostizierte Trajektorie des Kraftfahrzeugs zu ermitteln. Mit anderen Worten, anhand von erfassten das Fahrzeug betreffenden Daten und anhand von erfassten die Umgebung des Fahrzeugs betreffenden Daten beziehungsweise von Kartendaten ermittelt das Fahrzeug eine Prognose seiner Standorte auf einer 2D Oberfläche in einem zukünftigen Zeitabschnitt. Bevorzugt umfasst die prognostizierte Trajektorie ebenfalls prognostizierte Geschwindigkeits- und/oder Beschleunigungswerte (-vektoren) für jeden der prognostizierten Standorte.

Die Steuereinheit ist ferner dazu eingerichtet, anhand der prognostizierten Trajektorie des Kraftfahrzeugs und von Fahrzeuggeometriedaten des Kraftfahrzeugs einen prognostizierten Fahrschlauch des Kraftfahrzeugs zu ermitteln. Die Fahrzeuggeometriedaten umfassen dabei in einer einfachsten Ausführungsform die Abmessungen des Fahrzeugs, bevorzugt ein physikalisches Modell des Fahrzeugs, inklusive Drehpunkten, Achsenlage, Überständen, etc.

Somit ermittelt die Steuereinheit für jeden der prognostizierten Standorte des Fahrzeugs anhand der Abmessungen des Fahrzeugs und/oder eines physikalischen Modells des Kraftfahrzeugs einen Raumbedarf des Kraftfahrzeugs entlang der prognostizierten Trajektorie. Bevorzugt wird der Raumbedarf dabei nicht nur statisch anhand der Abmessungen des Fahrzeugs sondern ebenfalls dynamisch unter Berücksichtigung der auf das Fahrzeug beim Abfahren der prognostizierten Trajektorie wirkenden Kräfte ermittelt. Die wirkenden Kräfte sowie die Auswirkungen auf das physikalische Modell des Kraftfahrzeugs werden dabei bevorzugt anhand von Geschwindigkeits- und Beschleunigungsvektoren ermittelt.

Die Steuereinheit ist ferner dazu eingerichtet, über die Datenverbindung, insbesondere über eine *V2V* Datenverbindung eine prognostizierte Trajektorie und Fahrzeuggeometriedaten des anderen Kraftfahrzeugs zu empfangen. Die prognostizierte Trajektorie umfasst dabei ebenso die prognostizierten Standorte des anderen Fahrzeugs in einem zukünftigen Zeitabschnitt sowie bevorzugt prognostizierte Geschwindigkeits- und/oder Beschleunigungswerte (-vektoren) für jeden der prognostizierten Standorte. Die Fahrzeuggeometriedaten umfassen dabei in einer einfachsten Ausführungsform die Abmessungen des anderen Fahrzeugs, bevorzugt ein physikalisches Modell des Fahrzeugs, inklusive Drehpunkten, Achsenlage, Überständen, etc.

Die Steuereinheit des erfindungsgemäßen Fahrzeugs ist dazu eingerichtet, anhand dieser empfangenen Daten einen prognostizierten Fahrschlauch des anderen Kraftfahrzeugs zu ermitteln. Somit ermittelt die Steuereinheit für jeden der prognostizierten Standorte des anderen Fahrzeugs anhand der Abmessungen des anderen Kraftfahrzeugs und/oder eines physikalischen Modells des anderen Fahrzeugs einen Raumbedarf des anderen Kraftfahrzeugs entlang der prognostizierten Trajektorie. Bevorzugt wird der Raumbedarf dabei nicht nur statisch anhand der Abmessungen des anderen Kraftfahrzeugs sondern ebenfalls dynamisch unter Berücksichtigung der auf das andere Kraftfahrzeug beim Abfahren der prognostizierten Trajektorie wirkenden Kräfte ermittelt. Die wirkenden Kräfte sowie die Auswirkungen auf das physikalische Modell des anderen Kraftfahrzeugs werden dabei bevorzugt anhand von Geschwindigkeits- und Beschleunigungsvektoren ermittelt.

Die erfindungsgemäße Steuereinheit ist ferner dazu eingerichtet, anhand des prognostizierten Fahrschlauchs des Kraftfahrzeugs und anhand des prognostizierten Fahrschlauchs des anderen Kraftfahrzeugs eine mögliche Kollision des Kraftfahrzeugs und des anderen Kraftfahrzeugs zu ermitteln. Mit anderen Worten ermittelt das Kraftfahrzeug anhand des prognostizierten Raumbedarfs beider Fahrzeuge, ob diese zu einem zukünftigen Zeitpunkt gegebenenfalls denselben Raumbereich einnehmen. In solch einem Fall, wird eine mögliche Kollision ermittelt beziehungsweise prognostiziert.

Die erfindungsgemäße Steuereinheit ist ferner dazu eingerichtet, im Fall einer möglichen Kollision mittels des zumindest eines Ausgabeelements ein Warnsignal auszugeben beziehungsweise mittels des Fahrsystems ein automatisiertes Fahrmanöver durchzuführen. Das Durchführen eines automatisierten Fahrmanövers kann dabei von einem gewählten Fahrmodus abhängen und beispielsweise nur in einem automatisierten Fahrmodus erfolgen. Ebenfalls bevorzugt erfolgt ein automatisiertes Fahrmanöver jedoch auch in einem manuellen Fahrmodus, beispielsweise wenn ein Fahrer innerhalb einer vorgegebenen Zeit nach Ausgabe eines Warnhinweises kein entsprechendes Fahrmanöver zum Vermeiden der Kollision eingeleitet hat.

Das erfindungsgemäße Kraftfahrzeug ermittelt somit eine mögliche Kollision mit einem anderen Kraftfahrzeug anhand einer selbst durchgeführten Prognose zur eigenen Trajektorie und zum eigenen Raumbedarf sowie anhand einer selbst durchgeführten Prognose zum Raumbedarf des anderen Kraftfahrzeugs. Somit wird vorteilhaft eine verbesserte Genauigkeit der Prognose erreicht. Darüber hinaus kann das Wissen eines Nutzers, dass eine Warnmeldung auf einer Berechnung des eigenen Fahrzeugs basiert, die Bereitschaft erhöhen, auf den Warnhinweise entsprechend zu reagieren, da dieser nicht als Aufforderung eines anderen Fahrzeugs verstanden werden kann, die Fahrbahn freizugeben. Somit kann das erfindungsgemäße Kraftfahrzeug vorteilhaft die Akzeptanz für ein solches Kollisionswarnsystem erhöhen.

In einer bevorzugten Ausführungsform des erfindungsgemäßen Kraftfahrzeugs weist die Steuereinheit einen internen Speicher mit darauf abgelegten Kartendaten auf. Bei dem Ermitteln der prognostizierten Trajektorie und/oder beim Ermitteln des prognostizierten Fahrschlauchs greift die Steuereinheit bevorzugt auf diese Kartendaten zu, beispielsweise um anhand eines Kurvenradius die beim Durchfahren der Kurve voraussichtlich auf das Fahrzeug wirkenden Kräfte abzuschätzen. Ebenfalls bevorzugt ruft die Steuereinheit die Kartendaten von einem Navigationssystem des Kraftfahrzeugs ab. Das Navigationssystem verfügt in der Regel ohnehin über solche Daten und somit können Redundanzen vermieden werden. Ebenfalls bevorzugt ruft die Steuereinheit ferner Routeninformationen von dem Navigationssystem ab.

Die Steuereinheit stellt ferner bevorzugt hardwareseitig die entsprechenden Eingänge für die Signale der ersten Sensoren, für die Signale der zweiten Sensoren und für die Signale des Kommunikationsmoduls und gegebenenfalls des Navigationssystems bereit. Ferner ist die Steuereinheit dazu eingerichtet, die empfangenen Signale der ersten Sensoren, der zweiten Sensoren und des Kommunikationsmoduls als Eingangsgrößen zu verarbeiten. Die Steuereinheit stellt ferner bevorzugt hardwareseitig die entsprechenden Ausgänge für das Fahrsystem und das zumindest eine Ausgabeelement bereit und ist ferner dazu eingerichtet, die entsprechenden Steuersignale an das Fahrsystem und das Ausgabeelement auszugeben.

Ferner bevorzugt ist die Steuereinheit dazu eingerichtet, als Fahrzeugdaten eine absolute Position, Geschwindigkeit, Beschleunigung und Fahrtrichtung des Kraftfahrzeugs mittels zumindest eines zweiten Sensors zu ermitteln. Die zweiten Sensoren sind hierbei dafür eingerichtet, das Fahrzeug selbst betreffende Sensorsignale zu erfassen und umfassen beispielsweise einen Drehzahlsensor, einen GPS Sensor, ein Gyroskop, ein elektrisches Gaspedal, und dergleichen. Die Fahrzeugdaten erlauben es insbesondere, einen aktuellen Bewegungszustand des Kraftfahrzeugs, insbesondere einen aktuellen Phasenraumpunkt des Kraftfahrzeugs im Ortsraum zu ermitteln, wobei dieser Phasenraumpunkt insbesondere die Koordinate des Fahrzeugs sowie Geschwindigkeits- und Beschleunigungsvektoren umfasst. Ferner bevorzugt weisen die Fahrzeugdaten Informationen zu einer Nutzereingabe des Fahrers, wie beispielsweise das Setzen eines Blinkers und/oder das Betätigen des Bremspedals, auf.

Die Steuereinheit ist ferner bevorzugt dazu eingerichtet, als Umgebungsdaten eine aktuelle Spurbreite und Informationen zur Fahrspurbegrenzung zu ermitteln. Ebenfalls bevorzugt umfassen die Umgebungsdaten Informationen zum vorausliegenden Fahrbahnverlauf. Die ersten Sensoren sind hierbei dazu eingerichtet, die Umgebung des Fahrzeugs betreffende Informationen zu erfassen und umfassen beispielsweise eine Kamera, Ultraschall- oder LIDAR Abstandsensoren und dergleichen. Die Umgebungsdaten erlauben es insbesondere eine räumliche Umgebung des Fahrzeugs, wie beispielsweise fahrbahnbegrenzende Mauern oder Leitplanken, als Randbedingungen einer möglichen Fahrzeugbewegung zu ermitteln.

Ferner bevorzugt ist die Steuereinheit dazu eingerichtet, als Kartendaten Informationen zum Straßenverlauf von einem internen Speicher abzurufen. Die Informationen umfassen insbesondere Informationen zu Streckenzügen und Knotenpunkten der vorausliegenden Straße und bevorzugt zusätzliche Informationen, wie zu einem Höhenprofil oder einer Oberflächenbeschaffenheit der Straße. Alternativ oder zusätzlich ist die Steuereinheit dazu eingerichtet, als Kartendaten Informationen zum Straßenverlauf beziehungsweise zu einer Navigationsroute des Kraftfahrzeugs von dem internen Speicher oder einem Navigationssystem abzurufen. Eine Navigationsroute bezeichnet dabei eine anhand einer Nutzereingabe ermittelte und aktuell vom Fahrzeug befahrene Routenführung von einem Start- zu einem Zielpunkt. Eine solche Routenführung kann beispielsweise dazu verwendet werden, um ein Abbiegen des Fahrzeugs, sprich ein Verlassen einer aktuell befahrenen Straße zu prognostizieren.

Erfindungsgemäß ist die Steuereinheit dazu eingerichtet, als Fahrzeuggeometriedaten zumindest die Abmessungen des Kraftfahrzeugs (Breite und Länge, gegebenenfalls die exakte Kontur und Höhe), die Zahl und Lage der Achsen des Kraftfahrzeugs und die Abstände von Eckpunkten des Kraftfahrzeugs zu dessen Achsen zu ermitteln. Somit verfügt die Steuereinheit über alle Informationen, um eventuelle Überstände des Fahrzeugs, die bei Kurvenfahrten in andere Fahrspuren hineinragen könnten, zu ermitteln. Bevorzugt werden diese Fahrzeuggeometriedaten aus einem internen Speicher des Kraftfahrzeugs abgerufen oder sind als Datenbasis eines physikalischen Models des Kraftfahrzeugs hinterlegt. Erfindungsgemäß ist die Steuereinheit dazu eingerichtet, gleichartige Fahrzeuggeometriedaten des anderen Kraftfahrzeugs zu empfangen. Somit verfügt die Steuereinheit über alle Informationen, um auch die eventuellen Überstände des anderen Kraftfahrzeugs, die bei Kurvenfahrten in andere Fahrspuren hineinragen könnten, zu ermitteln. Diese Fahrzeuggeometriedaten des anderen Kraftfahrzeugs werden bevorzugt über eine Datenverbindung empfangen.

In einer ebenfalls bevorzugten Ausführungsform weist das erfindungsgemäße Kraftfahrzeug ferner zumindest einen Anhänger auf. Gemäß dieser Ausführungsform ist die Steuereinheit ferner dazu eingerichtet, als Fahrzeuggeometriedaten auch die Abmessungen des Anhängers (Breite und Länge, gegebenenfalls die exakte Kontur und Höhe), die Zahl und Lage der Achsen des Anhängers, die Abstände von Eckpunkten des Anhängers zu dessen Achsen, und zumindest einen Drehpunkt einer Anhängerkupplung zu ermitteln. Somit verfügt die Steuereinheit über alle Informationen, um eventuelle Überstände des Anhängers, die bei Kurvenfahrten in andere Fahrspuren hineinragen könnten, beziehungsweise um das Ausschwenkverhalten des Anhängers zu ermitteln. Bevorzugt werden diese Fahrzeuggeometriedaten aus einem internen Speicher des Kraftfahrzeugs oder des Anhängers abgerufen oder sind als Datenbasis eines physikalischen Models des Kraftfahrzeugs hinterlegt.

Ebenfalls bevorzugt ist die Steuereinheit dazu eingerichtet, gleichartige Fahrzeuggeometriedaten zu zumindest einem Anhänger des anderen Kraftfahrzeugs zu empfangen. Somit verfügt die Steuereinheit über alle Informationen, um auch die eventuellen Überstände des Anhängers des anderen Kraftfahrzeugs, die bei Kurvenfahrten in andere Fahrspuren hineinragen könnten, beziehungsweise um das Ausschwenkverhalten des Anhängers des anderen Fahrzeugs zu ermitteln. Diese Fahrzeuggeometriedaten des anderen Kraftfahrzeugs werden bevorzugt über eine Datenverbindung empfangen.

In einer ebenfalls bevorzugten Ausführungsform des erfindungsgemäßen Kraftfahrzeugs ist die Steuereinheit dazu eingerichtet, von dem Kraftfahrzeug und von dem anderen Kraftfahrzeug zukünftig eingenommene Raumbereiche als jeweiligen prognostizierten Fahrschlauch zu ermitteln. Dabei wird anhand der prognostizierten Position des jeweiligen Fahrzeugs auf einer zweidimensionalen Repräsentation der vorausliegenden Fahrstrecke sowie anhand der Fahrzeuggeometriedaten für jede Position ein von dem Fahrzeug ausgefüllter dreidimensionaler Raumbereich ermittelt. Ebenfalls bevorzugt wird der Raumbereich nur als Projektion des von dem Fahrzeug ausgefüllten dreidimensionalen Raumbereichs auf die zweidimensionale Repräsentation der vorausliegenden Fahrstrecke ermittelt. Bei der Ermittlung des prognostizierten Raumbereichs gehen bevorzugt auch prognostizierte Geschwindigkeits- und/oder Beschleunigungsvektoren für jede prognostizierte Position ein. Gemäß dieser Ausführungsform wird eine mögliche Kollision der Fahrzeuge ermittelt, sofern eine Überschneidung der prognostizierten Fahrschläuche festgestellt wird. Dabei bedeutet eine Überschneidung, dass beide Fahrzeuge zu einem zukünftigen Zeitpunkt prognostiziert denselben Raumbereich einnehmen beziehungsweise eine Überlappung der auf die zweidimensionale Repräsentation der Fahrstrecke projizierten Raumbereiche vorliegt.

In einer besonders bevorzugten Ausführungsform des erfindungsgemäßen Kraftfahrzeugs ist die Steuereinheit ferner dazu eingerichtet, anhand der Fahrzeuggeometriedaten und der prognostizierten Trajektorie des Kraftfahrzeugs zumindest einen Ausschwenkbereich des Kraftfahrzeugs zu ermitteln. Ein Ausschwenkbereich bezeichnet dabei insbesondere einen Bereich, in den ein über einen Drehpunkt des Fahrzeugs (häufig achsennah) überragender Karosseriebereich des Fahrzeugs bei einer Kurvenfahrt verlagert wird. Alternativ bezeichnet ein Ausschwenkbereich dabei einen Bereich, in den ein Anhänger des Fahrzeugs um einen Drehpunkt der Anhängerkupplung bei einer Kurvenfahrt des Fahrzeugs hineinschwenkt. Alternativ oder zusätzlich erfolgt ebenso bevorzugt eine Ermittlung zumindest eines Ausschwenkbereichs des anderen Kraftfahrzeugs anhand der Fahrzeuggeometriedaten und der prognostizierten Trajektorie des anderen Kraftfahrzeugs, wie obenstehend beschrieben.

In einer ebenso bevorzugten Ausführungsform des erfindungsgemäßem Kraftfahrzeugs ist die Steuereinheit ferner dazu eingerichtet, im Fall einer möglichen Kollision mit dem anderen Kraftfahrzeug eine alternative Trajektorie des Kraftfahrzeugs zu ermitteln. Die alternative Trajektorie des Kraftfahrzeugs führt dabei in Kombination mit den Fahrzeuggeometriedaten des Kraftfahrzeugs zu einem alternativen prognostizierten Fahrschlauch des Kraftfahrzeugs. Dieser alternative prognostizierte Fahrschlauch des Kraftfahrzeugs überschneidet dabei den prognostizierten Fahrschlauch des anderen Kraftfahrzeugs nicht. Das Ermitteln der alternativen Trajektorie des Kraftfahrzeugs stellt somit ein Optimierungsproblem dar, welches von dem Durchschnittsfachmann mittels einer geeigneten Programmieraufgabe gelöst werden kann. Gemäß dieser bevorzugten Ausführungsform des Kraftfahrzeugs ist das Fahrsystem ferner dafür eingerichtet, zumindest ein automatisiertes Fahrmanöver zum Überführen des Fahrzeugs auf die alternative Trajektorie durchzuführen. Mit anderen Worten ändert das Fahrzeug selbstständig sein Fahrverhalten, um die mögliche Kollision zu vermeiden. Die Änderung besteht dabei beispielsweise in einem Spurwechsel oder in einem Abbremsen des Fahrzeugs. Ebenfalls bevorzugt ermittelt die Steuereinrichtung basierend auf der alternativen prognostizierten Trajektorie eine Fahranweisung und gibt diese an das Fahrsystem aus. In diesem Fall ist das Fahrsystem bevorzugt dafür eingerichtet, basierend auf der empfangenen Fahranweisung zumindest ein automatisiertes Fahrmanöver/ eine automatisierte Fahrt von der aktuellen zu der alternativen Trajektorie durchzuführen. Besonders bevorzugt ist das Fahrsystem zur vollständig automatischen Führung des Kraftfahrzeugs ausgebildet und kann die Längsführung sowie die Querführung des Kraftfahrzeugs steuern. Ferner bevorzugt kann das Fahrsystem auf den zumindest einen ersten Sensor und/oder auf den zumindest einen zweiten Sensor zum Bestimmen von Zustandsinformationen und/oder von Umgebungsinformationen des Kraftfahrzeugs zugreifen. Diese ersten und zweiten Sensoren sind somit bevorzugt von dem Fahrsystem und von der Steuereinheit nutzbar.

Ebenfalls bevorzugt erfolgt eine Ausgabe eines Navigationshinweises, um dem Fahrer anzuzeigen, wie er auf die ermittelte alternative Trajektorie wechseln kann. Die Ausgabe des Navigationshinweises beziehungsweise der Manöverinformationen, wie beispielsweise Spurwechsel nach rechts, erfolgt bevorzugt gemeinsam mit der Ausgabe des Warnhinweises.

Die Erfindung betrifft auch ein Verfahren einer Steuereinheit gemäß Anspruch 9.

Bevorzugte Ausgestaltungen des Verfahrens entsprechen den obenstehend mit Bezug zum erfindungsgemäßen Kraftfahrzeug beschriebenen Ausführungsformen.

Die Verfahrensschritte des erfindungsgemäßen Verfahrens können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem flexiblen gedruckten Schaltungsträger, einem gedruckten Schaltungsträger (PCB), einem Tape Carrier Package (TCP) oder einem anderen geeigneten Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von einem oder mehreren Computerprogrammen erzeugt werden. Die Rechengeräte sind dabei bevorzugt dazu ausgebildet, mit anderen Komponenten, beispielsweise einem Projektor des HUD sowie einem oder mehreren Sensoren beziehungsweise Kameras zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne vom erfindungsgemäßen Verfahren abzuweichen.

Ein weiterer Aspekt der Erfindung betrifft ein Computerprogramm, umfassend Befehle, die bei der Ausführung des Programms durch einen Computer, wie beispielsweise eine Steuereinheit eines Kraftfahrzeugs, diesen veranlassen, das erfindungsgemäße Verfahren auszuführen, insbesondere umfassend die Schritte: Ermitteln einer prognostizierten Trajektorie des Kraftfahrzeugs anhand von Fahrzeugdaten und Umgebungsdaten und/oder Kartendaten, Ermitteln eines prognostizierten Fahrschlauchs des Kraftfahrzeugs anhand der prognostizierten Trajektorie des Kraftfahrzeugs und von Fahrzeuggeometriedaten des Kraftfahrzeugs, Empfangen einer prognostizierte Trajektorie und von Fahrzeuggeometriedaten eines anderen Kraftfahrzeugs mittels einer Datenverbindung, Ermitteln eines prognostizierten Fahrschlauchs des anderen Kraftfahrzeugs anhand der prognostizierten Trajektorie und der Fahrzeuggeometriedaten des anderen Kraftfahrzeugs, Ermitteln einer möglichen Kollision des Kraftfahrzeugs und des anderen Kraftfahrzeugs anhand des prognostizierten Fahrschlauchs des Kraftfahrzeugs und des prognostizierten Fahrschlauchs des anderen Kraftfahrzeugs, und Ausgeben einer optischen und/oder akustischen Warnung mittels zumindest eines Ausgabeelements und/oder Durchführen eines automatisierten Fahrmanövers mittels des Fahrsystems im Fall einer ermittelten möglichen Kollision. Bevorzugte Ausgestaltungen des Programms entsprechen den obenstehend mit Bezug zum erfindungsgemäßen Kraftfahrzeug beschriebenen Ausführungsformen.

Ein weiterer Aspekt der Erfindung betrifft ein computerlesbares Speichermedium, umfassend Befehle, die bei der Ausführung durch einen Computer, wie beispielsweise eine Steuereinheit eines Kraftfahrzeugs, diesen veranlassen, das erfindungsgemäße Verfahren auszuführen, insbesondere umfassend die Schritte: Ermitteln einer prognostizierten Trajektorie des Kraftfahrzeugs anhand von Fahrzeugdaten und Umgebungsdaten und/oder Kartendaten, Ermitteln eines prognostizierten Fahrschlauchs des Kraftfahrzeugs anhand der prognostizierten Trajektorie des Kraftfahrzeugs und von Fahrzeuggeometriedaten des Kraftfahrzeugs, Empfangen einer prognostizierte Trajektorie und von Fahrzeuggeometriedaten eines anderen Kraftfahrzeugs mittels einer Datenverbindung, Ermitteln eines prognostizierten Fahrschlauchs des anderen Kraftfahrzeugs anhand der prognostizierten Trajektorie und der Fahrzeuggeometriedaten des anderen Kraftfahrzeugs, Ermitteln einer möglichen Kollision des Kraftfahrzeugs und des anderen Kraftfahrzeugs anhand des prognostizierten Fahrschlauchs des Kraftfahrzeugs und des prognostizierten Fahrschlauchs des anderen Kraftfahrzeugs, und Ausgeben einer optischen und/oder akustischen Warnung mittels zumindest eines Ausgabeelements und/oder Durchführen eines automatisierten Fahrmanövers mittels des Fahrsystems im Fall einer ermittelten möglichen Kollision. Bevorzugte Ausgestaltungen des Speichermediums entsprechen den oben mit Bezug zum erfindungsgemäßen Kraftfahrzeug beschriebenen Ausführungsformen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Kraftfahrzeugs gemäß einer Ausführungsform; und
- Figur 2: ein schematisches Ablaufdiagramm eines erfindungsgemäßen Verfahrens.

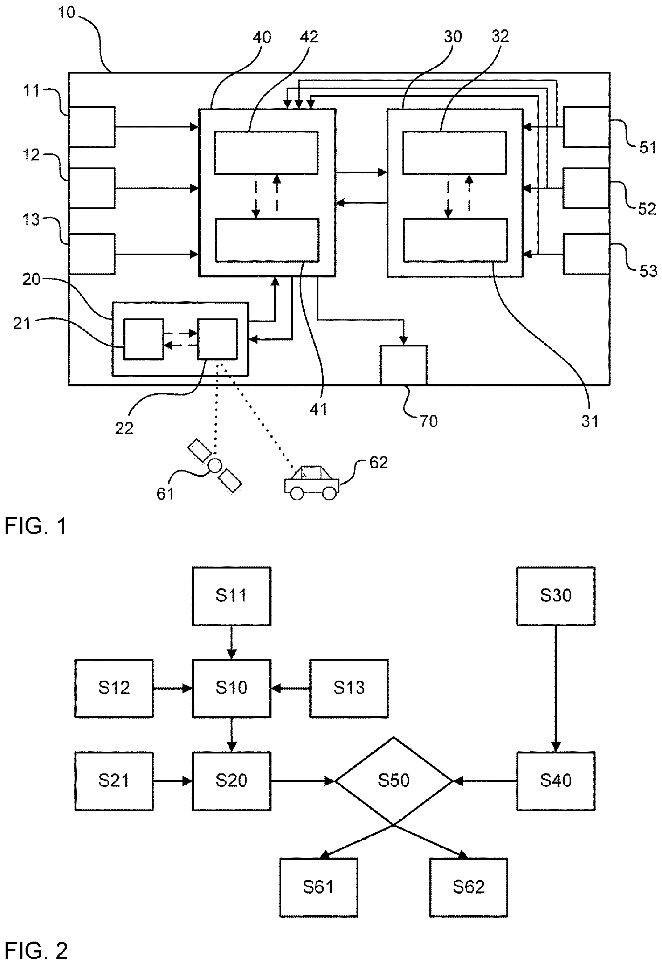

Figur 1 zeigt eine schematische Darstellung, insbesondere ein Blockdiagramm eines beispielhaften Kraftfahrzeugs 10, insbesondere eines zweispurigen Kraftfahrzeugs mit Verbrennungs-, Elektro- oder Hybridmotor. Das Kraftfahrzeug 10 umfasst eine Vielzahl erster Sensoren, insbesondere einen ersten Sensor 11, einen zweiten Sensor 12, und einen dritten Sensor 13.

Die ersten Sensoren 11, 12, 13 sind eingerichtet zum Erfassen von Umgebungsdaten des Kraftfahrzeugs 10 und umfassen beispielsweise eine Kamera zum Erfassen eines Bildes einer sich vor dem Kraftfahrzeug 10 befindlichen Fahrbahn und/oder Fahrbahnbegrenzungen, Abstandssensoren, wie beispielsweise Ultraschallsensoren, zum Erfassen von Abständen zu das Kraftfahrzeug 10 umgebenden Objekten, wie beispielsweise Fahrbahnbegrenzungen, wie Mauern oder Leitplanken. Die ersten Sensoren 11, 12, 13 übertragen die von ihnen erfassten Umgebungssignale an eine Steuereinheit 40 des Kraftfahrzeugs 10.

Das Kraftfahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Kraftfahrzeug 10 selbst betreffenden Fahrzeugdaten, insbesondere aktuelle Lage- und Bewegungsinformationen des Kraftfahrzeugs 10. Bei den zweiten Sensoren handelt es sich folglich beispielsweise um Geschwindigkeitssensoren, Beschleunigungssensoren, Neigungssensoren oder dergleichen. Die zweiten Sensoren 51, 52, 53 übermitteln die von ihnen erfassten Zustandssignale an die Steuereinheit 40 des Kraftfahrzeugs 10. Darüber hinaus übermitteln die zweiten Sensoren 51, 52, 53 ihre Messergebnisse unmittelbar an das Fahrsystem 30 des Kraftfahrzeugs 10.

Das Kraftfahrzeug weist ferner ein Kommunikationsmodul 20 mit einem Speicher 21 und einem oder mehreren Transpondern beziehungsweise Sendeempfängern 22 auf. Bei dem Transponder 22 handelt es sich um einen Funk- , WLAN-, GPS- oder Bluetooth-Sendeempfänger oder dergleichen, insbesondere um einen zur Kommunikation in einem Kommunikationsnetzwerk eingerichteten Transponder. Der Transponder kommuniziert mit dem internen Speicher 21 des Kommunikationsmoduls 20, beispielsweise über einen geeigneten Datenbus. Mittels des Transponders 22 kann beispielsweise die aktuelle Position des Kraftfahrzeugs 10 durch Kommunikation mit einem GPS Satelliten 61 ermittelt und diese im internen Speicher 21 gespeichert werden. Darüber hinaus ist das Kommunikationsmodul 20 dafür eingerichtet, über eine V2V Kommunikation mit einem anderen Fahrzeug 62 zu kommunizieren, bevorzugt über ein Kommunikationsnetzwerk. Das Kommunikationsmodul 20 kommuniziert auch mit der Steuereinheit 40. Insbesondere übermittelt es dieser empfangene Daten und/oder empfängt von dieser zu sendende Daten. Ferner kann das Kommunikationsmodul 20 auch zur Kommunikation mit einer Basisstation eines Kommunikationsnetzwerks eingerichtet sein.

Bei dem Kommunikationsnetzwerk handelt es sich bevorzugt um ein Netzwerk gemäß 3GPP Standard, beispielsweise um ein LTE, LTE-A (4G) oder 5G Kommunikationsnetzwerk. Das Kommunikationsnetzwerk kann ferner für die folgenden Operationen beziehungsweise gemäß der folgenden Standards ausgelegt sein: High Speed Packet Access (HSPA), a Universal Mobile Telecommunication System (UMTS), UMTS Terrestrial Radio Access Network (UTRAN), evolved-UTRAN (e-UTRAN), Global System for Mobile communication (GSM), Enhanced Data rates for GSM Evolution (EDGE), GSM/EDGE Radio Access Network (GERAN). Alternativ oder zusätzlich kann das Kommunikationsnetzwerk auch gemäß einem der folgenden Standards ausgebildet sein: Worldwide Inter-operability for Microwave Access (WIMAX) network IEEE 802.16, Wireless Local Area Network (WLAN) IEEE 802.11. Ebenfalls bevorzugt verwendet das Kommunikationsnetzwerk eine der folgenden Kodierungsverfahren: Orthogonal Frequency Division Multiple Access (OFDMA), Time Division Multiple Access (TDMA), Code Division Multiple Access (CDMA), a Wideband-CDMA (WCDMA), Frequency Division Multiple Access (FDMA), oder Spatial Division Multiple Access (SDMA) etc.

Das Kraftfahrzeug 10 weist ferner das Fahrsystem 30 auf, das zum vollständig automatisierten Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Kraftfahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus.

Zumindest ein Teil der zweiten Sensoren 51, 52, 53, des Kraftfahrzeugs übermittelt seine Messergebnisse direkt an das Fahrsystem 30. Bei diesen unmittelbar an das Fahrsystem 30 übermittelten Daten handelt es sich insbesondere um die aktuelle Lage- und Bewegungsinformationen des Kraftfahrzeugs 10. Diese werden bevorzugt von Geschwindigkeitssensoren, Beschleunigungssensoren, Neigungssensoren, etc. erfasst.

Das Kraftfahrzeug 10 weist ferner eine erfindungsgemäße Steuereinheit 40 auf, welche zum Durchführen der erfindungsgemäßen Verfahren, wie im Folgenden im Detail erläutert, eingerichtet ist. Hierzu verfügt die Steuereinheit 40 über einen internen Speicher 41 und eine CPU 42, welche miteinander kommunizieren, beispielsweise über einen geeigneten Datenbus. Darüber hinaus steht die Steuereinheit 40 in Kommunikationsverbindung mit zumindest den ersten Sensoren 11, 12, 13, den zweiten Sensoren 51, 52, 53, dem Kommunikationsmodul 20 und dem Fahrsystem 30, beispielsweise über eine oder mehrere jeweilige CAN-Verbindungen, eine oder mehrere jeweilige SPI-Verbindungen oder andere geeignete Datenverbindungen.

Figur 2 zeigt ein schematisches Ablaufdiagramm eines vom erfindungsgemäßen Kraftfahrzeug 10 durchgeführten erfindungsgemäßen Verfahrens.

In einem Schritt S10 des erfindungsgemäßen Verfahrens wird von der Steuereinheit 40 des Kraftfahrzeugs 10 eine prognostizierte Trajektorie des Kraftfahrzeugs 10 ermittelt. Hierzu empfängt die Steuereinheit verschiedene Daten, darunter in Schritt S11 Umgebungsdaten von den ersten Sensoren 11, 12, 13, wobei die Umgebungsdaten Informationen zur aktuellen Spurbreite und zur Art einer Fahrspurbegrenzung aufweisen.

Ferner empfängt die Steuereinheit 40 in Schritt S12 Fahrzeugdaten von den zweiten Sensoren 51, 52, 53, wobei die Fahrzeugdaten insbesondere aktuelle Lage- und Bewegungsinformationen des Kraftfahrzeugs 10 aufweisen. Zudem empfängt die Steuereinheit 40 in Schritt S13 Karteninformationen zu einem vorausliegenden Streckenverlauf sowie zu einer aktuellen Navigationsroute, entweder von dem internen Speicher 41 der Steuereinheit 40 selbst oder von dem Navigationsmodul 32 des Fahrsystems 30.

Die prognostizierte Trajektorie wird in einem Schritt S20 weiterverarbeitet, wobei die Steuereinheit 40 zum Weiterverarbeiten der prognostizierten Trajektorie ferner in Schritt S21 empfangene Fahrzeuggeometriedaten verwendet. Die Fahrzeuggeometriedaten umfassen dabei Informationen zu den Abmessungen und dem Ausschwenkverhalten des Kraftfahrzeugs 10. Unter Berücksichtigung der Fahrzeuggeometriedaten und der prognostizierten Trajektorie bestimmt die Steuereinheit 40 schließlich den prognostizierten Fahrschlauch als die von dem Kraftfahrzeug 10 eingenommenen Raumbereiche entlang der prognostizierten Trajektorie.

In einem Schritt S30 empfängt die Steuereinheit 40 Informationen zu einer prognostizierten Trajektorie sowie Fahrzeuggeometriedaten des anderen Kraftfahrzeugs 62 via Kommunikationsmodul 20. Anhand der Fahrzeuggeometriedaten und der prognostizierten Trajektorie des anderen Kraftfahrzeugs 62 bestimmt die Steuereinheit 40 in Schritt S40 den prognostizierten Fahrschlauch des anderen Kraftfahrzeugs 62 als die von dem anderen Kraftfahrzeug 62 eingenommenen Raumbereiche entlang der prognostizierten Trajektorie des anderen Kraftfahrzeugs 62.

In einem Schritt S50 ermittelt die Steuereinheit 40 anhand des in Schritt S20 prognostizierten Fahrschlauchs des Kraftfahrzeugs 10 und anhand des in Schritt S40 prognostizierten Fahrschlauchs des anderen Kraftfahrzeugs 62 eine mögliche Kollision des Kraftfahrzeugs 10 mit dem anderen Kraftfahrzeug 62. Sofern in Schritt S50 keine mögliche Kollision ermittelt wird, startet das erfindungsgemäße Verfahren erneut, insbesondere werden die Schritte S10 bis S50 regelmäßig wiederholt, um regelmäßig auf mögliche Kollisionen zu prüfen. Dabei können Daten von verschiedenen, insbesondere von mehreren anderen Kraftfahrzeugen 62, zur selben Zeit empfangen werden.

Wird in Schritt S50 ermittelt, dass eine Kollision der Fahrzeuge 10, 62 möglich beziehungsweise wahrscheinlich ist, erfolgt in Schritt S61 eine Ausgabe einer optischen und/oder akustischen Warnung an einen Fahrer des Kraftfahrzeugs 10 mittels zumindest eines Ausgabeelements 70. Das zumindest eine Ausgabeelement 70 ist dabei bevorzugt Teil einer Digitalanzeige und/oder eines Infotainmentsystems des Kraftfahrzeugs 10. Alternativ oder zusätzlich erfolgt in Schritt S62 in Reaktion auf das Ermitteln einer möglichen Kollision in Schritt S50 das Durchführen eines automatisierten Fahrmanövers mittels des Fahrsystems 30. Das Fahrmanöver führt das Kraftfahrzeug 10 auf eine alternative Trajektorie, auf der eine Kollision mit dem anderen Fahrzeug 62 vermieden wird.

### Bezugszeichenliste

- 10: Kraftfahrzeug
- 11: erster Sensor
- 12: zweiter Sensor
- 13: dritter Sensor
- 20: Kommunikationsmodul
- 21: Speicher
- 22: Transponder
- 30: Fahrsystem
- 31: Speicher
- 32: Navigationsmodul
- 40: Steuereinheit
- 41: Speicher
- 42: CPU
- 51: vierter Sensor
- 52: fünfter Sensor
- 53: sechster Sensor
- 61: Satellit
- 62: Fahrzeug
- 70: Ausgabeelement

## Patentansprüche

1. Kraftfahrzeug (10), aufweisend:
- zumindest einen zum Erfassen von Umgebungsdaten eingerichteten ersten Sensor (11, 12, 13) und zumindest einen zum Erfassen von Fahrzeugdaten eingerichteten zweiten Sensor (51, 52, 53);
- ein Kommunikationsmodul (20) zum Herstellen einer Datenverbindung mit einem anderen Kraftfahrzeug (62);
- ein zum automatisierten Fahren des Kraftfahrzeugs eingerichtetes Fahrsystem (30);
- zumindest ein Ausgabeelement (70) für ein optisches und/oder akustisches Warnsignal; und
- eine Steuereinheit (40), wobei die Steuereinheit (40) dafür eingerichtet ist:
• anhand von Fahrzeugdaten und Umgebungsdaten und/oder Kartendaten eine prognostizierte Trajektorie des Kraftfahrzeugs (10) zu ermitteln,
• anhand der prognostizierten Trajektorie des Kraftfahrzeugs (10) und anhand von Abmessungen des Kraftfahrzeugs (10), von Zahl und Lage der Achsen des Kraftfahrzeugs (10) und von Abständen von Eckpunkten des Kraftfahrzeugs (10) zu dessen Achsen als Fahrzeuggeometriedaten des Kraftfahrzeugs (10) einen prognostizierten Fahrschlauch des Kraftfahrzeugs (10) zu ermitteln,
• über die Datenverbindung eine prognostizierte Trajektorie und als Fahrzeuggeometriedaten des anderen Kraftfahrzeugs (62), Abmessungen des anderen Kraftfahrzeugs (62), Zahl und Lage der Achsen des anderen Kraftfahrzeugs (62) und Abstände von Eckpunkten des anderen Kraftfahrzeugs (62) zu dessen Achsen, zu empfangen,
• anhand der prognostizierten Trajektorie und der Fahrzeuggeometriedaten des anderen Kraftfahrzeugs (62) einen prognostizierten Fahrschlauch des anderen Kraftfahrzeugs (62) zu ermitteln,
• anhand des prognostizierten Fahrschlauchs des Kraftfahrzeugs (10) und des prognostizierten Fahrschlauchs des anderen Kraftfahrzeugs (62) eine mögliche Kollision des Kraftfahrzeugs (10) und des anderen Kraftfahrzeugs (62) zu ermitteln, und
• im Fall einer möglichen Kollision mittels des zumindest einen Ausgabeelements (70) ein Warnsignal auszugeben und/oder mittels des Fahrsystems (30) ein automatisiertes Fahrmanöver durchzuführen.

2. Kraftfahrzeug (10) nach Anspruch 1, wobei die Steuereinheit (40) einen internen Speicher (41) mit darauf abgelegten Kartendaten aufweist und/oder dazu eingerichtet ist, Kartendaten von einem Navigationssystem des Kraftfahrzeugs (10), abzurufen.

3. Kraftfahrzeug nach Anspruch 1 oder 2, wobei die Steuereinheit (40) dazu eingerichtet ist,
- als Fahrzeugdaten eine absolute Position, Geschwindigkeit, Beschleunigung und Fahrtrichtung des Kraftfahrzeugs (10) mittels zumindest eines zweiten Sensors (51, 52, 53) zu ermitteln,
- als Umgebungsdaten eine aktuelle Spurbreite und Informationen zur Fahrspurbegrenzung zu ermitteln und/oder
- als Kartendaten Informationen zum Straßenverlauf und/oder zu einer Navigationsroute des Kraftfahrzeugs (10) von einem internen Speicher (41) und/oder einem Navigationssystem zu ermitteln.

4. Kraftfahrzeug (10) nach einem der vorangehenden Ansprüche, ferner aufweisend einen Anhänger, wobei die Steuereinheit (40) dazu eingerichtet ist, als Fahrzeuggeometriedaten Abmessungen des Anhängers, Zahl und Lage der Achsen des Anhängers (10), Abstände von Eckpunkten des Anhängers (10) zu dessen Achsen, und zumindest einen Drehpunkt einer Anhängerkupplung zu ermitteln und/oder ferner dazu eingerichtet ist, gleichartige Fahrzeuggeometriedaten des anderen Kraftfahrzeugs (62) zu empfangen.

5. Kraftfahrzeug (10) nach einem der vorangehenden Ansprüche, wobei die Steuereinheit (40) dazu eingerichtet ist, von dem Kraftfahrzeug (10) und von dem anderen Kraftfahrzeug (62) zukünftig eingenommene Raumbereiche als jeweiligen prognostizierten Fahrschlauch zu ermitteln und bei einer Überschneidung der prognostizierten Fahrschläuche eine mögliche Kollision zu ermitteln.

6. Kraftfahrzeug (10) nach einem der vorangehenden Ansprüche, wobei die Steuereinheit (40) ferner dazu eingerichtet ist, anhand der Fahrzeuggeometriedaten und der prognostizierten Trajektorie des Kraftfahrzeugs (10) beziehungsweise des anderen Kraftfahrzeugs (62) zumindest einen Ausschwenkbereich des Kraftfahrzeugs (10) beziehungsweise des anderen Kraftfahrzeugs (62) zu ermitteln und den prognostizierten Fahrschlauch des Kraftfahrzeugs (10) beziehungsweise des anderen Kraftfahrzeugs (62) in Abhängigkeit des zumindest einen Ausschwenkbereichs zu ermitteln.

7. Kraftfahrzeug (10) nach einem der vorangehenden Ansprüche, wobei die Steuereinheit (40) ferner dazu eingerichtet ist, im Fall einer möglichen Kollision mit dem anderen Kraftfahrzeug (62) eine alternative Trajektorie des Kraftfahrzeugs (10) zu ermitteln, die in Kombination mit den Fahrzeuggeometriedaten des Kraftfahrzeugs (10) zu einem alternativen prognostizierten Fahrschlauch des Kraftfahrzeugs (10) führt, welcher den prognostizierten Fahrschlauch des anderen Kraftfahrzeugs (62) nicht überschneidet.

8. Kraftfahrzeug (10) nach Anspruch 7, wobei das Fahrsystem (30) dafür eingerichtet ist, zumindest ein automatisiertes Fahrmanöver zum Überführen des Fahrzeugs auf die alternative Trajektorie durchzuführen und/oder wobei das Ausgabeelement (70) ferner dazu ausgebildet ist, eine Navigationsanweisung zum Überführen des Kraftfahrzeugs (10) auf die alternative Trajektorie an einen Fahrer des Kraftfahrzeugs (10) auszugeben.

9. Verfahren einer Steuereinheit (40) eines Kraftfahrzeugs (10), aufweisend die Schritte:
Ermitteln (S10) einer prognostizierten Trajektorie des Kraftfahrzeugs (10) anhand von Fahrzeugdaten und Umgebungsdaten und/oder Kartendaten;
Ermitteln (S20) eines prognostizierten Fahrschlauchs des Kraftfahrzeugs (10) anhand der prognostizierten Trajektorie des Kraftfahrzeugs (10) und anhand von Abmessungen des Kraftfahrzeugs (10), von Zahl und Lage der Achsen des Kraftfahrzeugs (10) und von Abständen von Eckpunkten des Kraftfahrzeugs (10) zu dessen Achsen als Fahrzeuggeometriedaten des Kraftfahrzeugs (10);
Empfangen (S30) einer prognostizierte Trajektorie und, als Fahrzeuggeometriedaten eines anderen Kraftfahrzeugs (62), von Abmessungen des anderen Kraftfahrzeugs (62), Zahl und Lage der Achsen des anderen Kraftfahrzeugs (62) und Abstände von Eckpunkten des anderen Kraftfahrzeugs (62) zu dessen Achsen, mittels einer Datenverbindung;
Ermitteln (S40) eines prognostizierten Fahrschlauchs des anderen Kraftfahrzeugs (62) anhand der prognostizierten Trajektorie und der Fahrzeuggeometriedaten des anderen Kraftfahrzeugs (62),
Ermitteln (S50) einer möglichen Kollision des Kraftfahrzeugs (10) mit dem anderen Kraftfahrzeug (62) anhand des prognostizierten Fahrschlauchs des Kraftfahrzeugs (10) und des prognostizierten Fahrschlauchs des anderen Kraftfahrzeugs (62), und Ausgeben (S61) einer optischen und/oder akustischen Warnung mittels zumindest eines Ausgabeelements (70) und/oder
Durchführen (S62) eines automatisierten Fahrmanövers mittels des Fahrsystems (30) im Fall einer ermittelten möglichen Kollision.

## Claims

1. Motor vehicle (10) comprising:
- at least one first sensor (11, 12, 13) which is configured to detect environmental data and at least one second sensor (51, 52, 53) which is configured to detect vehicle data;
- a communication module (20) for establishing a data connection to another motor vehicle (62);
- a driving system (30) which is configured to drive the motor vehicle in an automated manner;
- at least one output element (70) for an optical and/or acoustic warning signal; and
- a control unit (40), wherein the control unit (40) is configured to:
• determine a predicted path of the motor vehicle (10) on the basis of vehicle data and environmental data and/or map data,
• determine, as vehicle geometry data of the motor vehicle (10), a predicted driving path of the motor vehicle (10) on the basis of the predicted path of the motor vehicle (10) and on the basis of dimensions of the motor vehicle (10), of the number and position of the axles of the motor vehicle (10) and of distances from corner points of the motor vehicle (10) to the axles thereof,
• receive, via the data connection, a predicted path and, as vehicle geometry data of the other motor vehicle (62), dimensions of the other motor vehicle (62), number and position of the axles of the other motor vehicle (62) and distances from corner points of the other motor vehicle (62) to the axles thereof,
• determine a predicted driving path of the other motor vehicle (62) on the basis of the predicted path and the vehicle geometry data of the other motor vehicle (62),
• determine a possible collision of the motor vehicle (10) and of the other motor vehicle (62) on the basis of the predicted driving path of the motor vehicle (10) and the predicted driving path of the other motor vehicle (62), and
• in the event of a possible collision, output a warning signal by means of the at least one output element (70) and/or carry out an automated driving maneuver by means of the driving system (30).

2. Motor vehicle (10) according to claim 1, wherein the control unit (40) has an internal memory (41) with map data stored thereon and/or is configured to retrieve map data from a navigation system of the motor vehicle (10).

3. Motor vehicle according to either claim 1 or claim 2, wherein the control unit (40) is configured to
- determine, as vehicle data, an absolute position, speed, acceleration and driving direction of the motor vehicle (10) by means of at least one second sensor (51, 52, 53),
- determine, as environmental data, a current lane width and information about the lane boundary and/or
- determine, as map data, information about the road course and/or about a navigation route of the motor vehicle (10) from an internal memory (41) and/or a navigation system.

4. Motor vehicle (10) according to any of the preceding claims, further comprising a trailer, wherein the control unit (40) is configured to determine, as vehicle geometry data, dimensions of the trailer, number and position of the axles of the trailer (10), distances from corner points of the trailer (10) to the axles thereof, and at least one rotation point of a trailer coupling and/or is further configured to receive similar vehicle geometry data of the other motor vehicle (62).

5. Motor vehicle (10) according to any of the preceding claims, wherein the
control unit (40) is configured to determine, from the motor vehicle (10) and from the other motor vehicle (62), spatial regions which are assumed in the future as the relevant predicted driving path and to determine a possible collision if the predicted driving paths intersect.

6. Motor vehicle (10) according to any of the preceding claims, wherein the
control unit (40) is further configured to determine, on the basis of the vehicle geometry data and the predicted path of the motor vehicle (10) or the other motor vehicle (62), at least one swinging-out region of the motor vehicle (10) or the other motor vehicle (62) and to determine the predicted driving path of the motor vehicle (10) or the other motor vehicle (62) on the basis of the at least one swinging-out region.

7. Motor vehicle (10) according to any of the preceding claims, wherein the control unit (40) is further configured to determine, in the event of a possible collision with the other motor vehicle (62), an alternative path of the motor vehicle (10), which, in combination with the vehicle geometry data of the motor vehicle (10), leads to an alternative predicted driving path of the motor vehicle (10) which does not intersect the predicted driving path of the other motor vehicle (62).

8. Motor vehicle (10) according to claim 7, wherein the driving system (30) is configured to carry out at least one automated driving maneuver for transferring the vehicle to the alternative path and/or wherein the output element (70) is further designed to output a navigation instruction for transferring the motor vehicle (10) to the alternative path to a driver of the motor vehicle (10).

9. Method of a control unit (40) of a motor vehicle (10), comprising the steps of:
determining (S10) a predicted path of the motor vehicle (10) on the basis of vehicle data and environmental data and/or map data;
determining (S20), as vehicle geometry data of the motor vehicle (10), a predicted driving path of the motor vehicle (10) on the basis of the predicted path of the motor vehicle (10) and on the basis of dimensions of the motor vehicle (10), of the number and position of the axles of the motor vehicle (10) and of distances from corner points of the motor vehicle (10) to the axles thereof;
receiving (S30) a predicted path and, as vehicle geometry data of another motor vehicle (62), dimensions of the other motor vehicle (62), the number and position of the axles of the other motor vehicle (62) and distances from corner points of the other motor vehicle (62) to the axles thereof, by means of a data connection;
determining (S40) a predicted driving path of the other motor vehicle (62) on the basis of the predicted path and the vehicle geometry data of the other motor vehicle (62),
determining (S50) a possible collision of the motor vehicle (10) with the other motor vehicle (62) on the basis of the predicted driving path of the motor vehicle (10)
and the predicted driving path of the other motor vehicle (62), and
outputting (S61) an optical and/or acoustic warning by means of at least one output element (70) and/or
carrying out (S62) an automated driving maneuver by means of the driving system (30) in the event of a determined possible collision.

## Revendications

1. Véhicule automobile (10), présentant :
- au moins un premier capteur (11, 12, 13) conçu pour capturer des données environnementales et au moins un second capteur (51, 52, 53) conçu pour capturer des données de véhicule ;
- un module de communication (20) pour l'établissement d'une liaison de données avec un autre véhicule automobile (62) ;
- un système de conduite (30) conçu pour la conduite automatisée du véhicule automobile ;
- au moins un élément de sortie (70) pour un signal d'avertissement optique et/ou acoustique ; et
- une unité de commande (40), dans lequel l'unité de commande (40) est conçue pour :
• à l'aide des données de véhicule et des données environnementales et/ou de données de carte, déterminer une trajectoire prédite du véhicule automobile (10),
• à l'aide de la trajectoire prédite du véhicule automobile (10) et à l'aide de dimensions du véhicule automobile (10), du nombre et de la position des essieux du véhicule automobile (10) et des distances entre les angles du véhicule automobile (10) à ses essieux en guise de données géométriques du véhicule automobile (10), déterminer un parcours prédit du véhicule automobile (10),
• par le biais de la liaison de données, recevoir une trajectoire prédite et, en guise de données géométriques de véhicule de l'autre véhicule automobile (62), les dimensions de l'autre véhicule automobile (62), le nombre et la position des essieux de l'autre véhicule automobile (62) et les distances entre les angles de l'autre véhicule automobile (62) et ses essieux,
• à l'aide de la trajectoire prédite et des données géométriques de véhicule de l'autre véhicule automobile (62), déterminer un parcours prédit de l'autre véhicule automobile (62),
• à l'aide du parcours prédit du véhicule automobile (10) et du parcours prédit de l'autre véhicule automobile (62) déterminer une collision possible du véhicule automobile (10) et de l'autre véhicule automobile (62) et
• dans le cas d'une collision possible, émettre, au moyen de l'au moins un élément de sortie (70), un signal d'avertissement et/ou réaliser une manoeuvre de conduite automatisée au moyen du système de conduite (30).

2. Véhicule automobile (10) selon la revendication 1, dans lequel l'unité de commande (40) présente une mémoire interne (41) sur laquelle sont enregistrées des données de carte et/ou qui est conçue pour récupérer des données de carte à partir d'un système de navigation du véhicule automobile (10).

3. Véhicule automobile selon la revendication 1 ou 2, dans lequel l'unité de commande (40) est conçue,
- pour déterminer, en guise de données de véhicule, une position absolue, une vitesse, une accélération et une direction de déplacement du véhicule automobile (10) au moyen d'au moins un second capteur (51, 52, 53),
- pour déterminer, en guise de données environnementales, une largeur de voie réelle et des informations sur une limite de voie de circulation et/ou
- pour déterminer, en guise de données de carte, des informations sur le tracé de la route et/ou sur un itinéraire de navigation du véhicule automobile (10) à partir d'une mémoire interne (41) et/ou d'un système de navigation.

4. Véhicule automobile (10) selon l'une quelconque des revendications précédentes, présentant en outre une remorque, dans lequel l'unité de commande (40) est conçue pour déterminer, en guise de données de géométrie de véhicule, des dimensions de la remorque, le nombre de la position des essieux de la remorque (10), des distances entre les angles de la remorque (10) et ses essieux et au moins un point de rotation d'un attelage de remorque et/ou est en outre conçue pour recevoir des données de géométrie de véhicule similaires de l'autre véhicule automobile (62).

5. Véhicule automobile (10) selon l'une quelconque des revendications précédentes, dans lequel l'unité de commande (40) est conçue pour déterminer, des espaces occupés dans le futur par le véhicule automobile (10) et par l'autre véhicule automobile (62) en guise de parcours prédit respectif et pour déterminer, lors d'un recoupement des parcours respectifs, une collision possible.

6. Véhicule automobile (10) selon l'une quelconque des revendications précédentes, dans lequel l'unité de commande (40) est en outre conçue pour déterminer, à l'aide des données de géométrie de véhicule et de la trajectoire prédite du véhicule automobile (10) respectivement de l'autre véhicule automobile (62), au moins une plage de pivotement du véhicule automobile (10) respectivement de l'autre véhicule automobile (62) et pour déterminer le parcours prédit du véhicule automobile (10) respectivement de l'autre véhicule automobile (62) en fonction de l'au moins une plage de pivotement.

7. Véhicule automobile (10) selon l'une quelconque des revendications précédentes, dans lequel l'unité de commande (40) est en outre conçue pour déterminer, en cas de collision possible avec l'autre véhicule automobile (62), une trajectoire alternative du véhicule automobile (10), qui conduit, en combinaison avec les données de géométrie de véhicule du véhicule automobile (10), à un parcours prédit alternatif du véhicule automobile (10), qui ne recoupe pas le parcours prédit de l'autre véhicule automobile (62).

8. Véhicule automobile (10) selon la revendication 7, dans lequel le système de conduite (30) est conçu pour réaliser au moins une manoeuvre de conduite automatisée pour faire passer le véhicule sur la trajectoire alternative et/ou dans lequel l'élément de sortie (70) est en outre conçu pour émettre une indication de navigation pour faire passer le véhicule automobile (10) sur la trajectoire alternative pour un conducteur du véhicule automobile (10).

9. Procédé d'une unité de commande (40) d'un véhicule automobile (10), comprenant les étapes :
de détermination (S10) d'une trajectoire prédite du véhicule automobile (10) à l'aide de données de véhicule et de données environnementales et/ou de données de carte ;
de détermination (S20) d'un parcours prédit du véhicule automobile (10) à l'aide de la trajectoire prédite du véhicule automobile (10) et à l'aide de dimensions du véhicule automobile (10), du nombre et de la position des essieux du véhicule automobile (10) et des distances entre les angles du véhicule automobile (10) à ses essieux en guise de données géométriques du véhicule automobile (10) ;
de réception (S30) d'une trajectoire prédite et, en guise de données géométriques de véhicule d'un autre véhicule automobile (62), de dimensions de l'autre véhicule automobile (62), du nombre et de la position des essieux de l'autre véhicule automobile (62) et des distances entre les angles de l'autre véhicule automobile (62) et ses essieux, au moyen d'une liaison de données ;
de détermination (S40) d'un parcours prédit de l'autre véhicule automobile (62) à l'aide de la trajectoire prédite et des données de géométrie de véhicule de l'autre véhicule automobile (62),
de détermination (S50) d'une collision possible du véhicule automobile (10) avec l'autre véhicule automobile (62) à l'aide du parcours prédit du véhicule automobile (10) et du parcours prédit de l'autre véhicule automobile (62) et
d'émission (S61) d'un avertissement optique et/ou acoustique au moyen d'au moins un élément de sortie (70) et/ou
de réalisation (S62) d'une manoeuvre de conduite automatisée au moyen du système de conduite (30) en cas de collision possible déterminée.
